(19) Europäisches Patentamt
European Patent Office
Office européen des brevets

(11) EP 0 658 307 B1

# (12) EUROPÄISCHE PATENTSCHRIFT

(45) Veröffentlichungstag und Bekanntmachung des Hinweises auf die Patenterteilung:
**02.12.1998 Patentblatt 1998/49**

(21) Anmeldenummer: **93922098.4**

(22) Anmeldetag: **02.09.1993**

(51) Int. Cl.$^6$: **A01N 47/36**, A01N 33/12

(86) Internationale Anmeldenummer:
**PCT/RU93/00210**

(87) Internationale Veröffentlichungsnummer:
**WO 94/05154 (17.03.1994 Gazette 1994/07)**

## (54) HERBIZIDE ZUSAMMENSETZUNG
HERBICIDAL COMPOSITION
COMPOSITION HERBICIDE

(84) Benannte Vertragsstaaten:
**AT BE CH DE DK ES FR GB GR IE IT LI LU MC NL PT SE**

(30) Priorität: **04.09.1992 RU 5061714**

(43) Veröffentlichungstag der Anmeldung:
**21.06.1995 Patentblatt 1995/25**

(73) Patentinhaber:
**R&D KARE INTERNATIONAL, INC.**
**Van Nuys, CA 91411 (US)**

(72) Erfinder:
**Sorokin, Vladimir Iosifovich**
**Moscow, 125284 (RU)**

(74) Vertreter:
**von Füner, Alexander, Prof.h.c. Dr. et al**
**Patentanwälte v. Füner, Ebbinghaus, Finck**
**Mariahilfplatz 2 & 3**
**81541 München (DE)**

(56) Entgegenhaltungen:
**EP-A- 0 480 306** **CH-A- 668 530**
**GB-A- 2 251 613**

- **L.T. MAKEEVA-GURYANOVA et al., "Sulfonilmochevinynovye Perspektivnye Gerbitsidy", Obzornaya Informatsia, 1989, Gosagroprom SSSR (Moscow), pages 20-21, pages 48-55.**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Xerox (UK) Business Services
2.16.6/3.4

**Beschreibung**

Die vorliegende Erfindung bezieht sich auf die Landwirtschaft, vornehmlich auf chemische Mittel zur Unkrautbekämpfung.

Die herbizide Wirkung von Sulfonylharnstoffderivaten ist bekannt.

Die spezifische Wirkung aller Präparate auf Sulfonylharnstoffbasis beruht auf der Inhibierung der Aminosäurebiosynthese im frühen Stadium mittels Unterdrückung der Aktivität des Ferments Acetolactatsyntase (ALS). Die herbizide Aktivität der Sulfonylharnstoffderivate korreliert mit deren Fähigkeit als Inhibitor der ALS zu wirken.

Die ALS der meisten höheren Pflanzen ist hochsensibel gegenüber Herbiziden aus der Reihe der Sulfonylharnstoffe. Doch die Resistenz einiger Pflanzen, z.B. Weizen, gegen diese Verbindungen zeugt von einer undifferenzierten Empfindlichkeit der ALS und ist mit der Inaktivierung und Detoxikation des Sulfonylharnstoffderivates selbst verbunden. Bei verschiedenen Derivaten entwickeln sich diese Prozesse mit unterschiedlicher Intensität. Dies bedingt bei den herbiziden Zusammensetzungen sowohl eine hohe Selektivität in bezug auf landwirtschaftliche Kulturen als auch eine Resistenzentwicklung beim Unkraut. Die in vorliegender Erfindung angeführten Sulfonylharnstoffe werden ausschließlich in Saaten der Getreidekulturen - Weizen, Roggen, Hafer - angewendet.

Die den vielen bekannten Sulfonylharnstoffderivaten eigene niedrige Zersetzungsgeschwindigkeit im Boden verursacht bei unbeabsichtigten Überdosen negative Nachwirkungen bei der Saatfolge und erhebliche phytotoxische Effekte bei einigen landwirtschaftlichen Kulturen, in erster Linie bei Mais und Soja.

Alle bekannten herbiziden Zusammensetzungen auf Sulfonylharnstoffbasis sind benetzbare Pulver oder Mikrogranulate. Das Fehlen von Präparaten in wasserlöslicher Form ist auf die geringe Löslichkeit der Sulfonylharnstoffe in Wasser und deren verhältnismäßig hohe Hydrolysegeschwindigkeit zurückzuführen (C. Smith, Sulfonylurea herbicides, 1991, PIB Publication Ltd., pgs. 51, 67, 99, 107)

Der vorliegenden Erfindung lag die Aufgabe zugrunde, eine herbizide Zusammensetzung bereitzustellen, die die angeführten Nachteile nicht aufweist, d.h. die bei niedriger Aufwandmenge der Sulfonylharnstoffe über ein breites Wirkungsspektrum auf Unkraut verfügt und keine phytotoxischen Einflüsse auf Kulturpflanzen ausübt.

Bekannt ist eine herbizide Zusammensetzung mit breiten Wirkungsspektrum bestehend aus zwei Sulfonylharnstoffen der Formeln A und B:

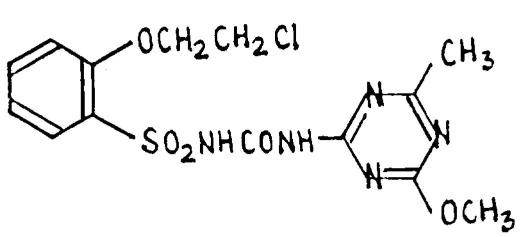

(A)

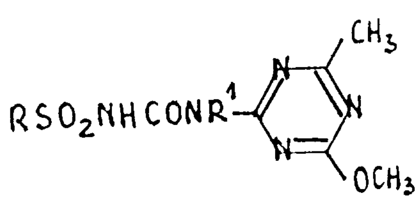

(B)

worin

R =

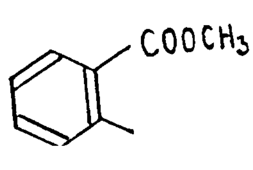

,

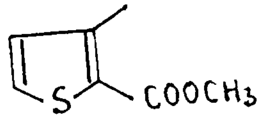

;

$R_1$ = H, $CH_3$,

und zusätzlich einer oberflächenaktiven Substanz (Tensid), einem organischen Lösungsmittel und Wasser (EP 0 236 273, A01 N 47/36, 1987).

Bekannt ist auch ein Verfahren zur Unkrautbekämpfung mittels obengenannter herbizider Zusammensetzung,

gemäß dem Pflanzen und Boden mit Emulsionen oder Suspensionen dieser herbiziden Zusammensetzung in einer Menge von bis zu 3 kg/ha behandelt werden.

Diese herbizide Zusammensetzung übt eine unerwünschte phytotoxische Wirkung auf landwirtschaftliche Kulturen, z.B. Mais und Soja aus.

Die vorliegende Erfindung betrifft eine herbizide Zusammensetzung bestehend aus einem Ammoniumsalz eines Benzolsulfonylharnstoffderivats der Formel (I)

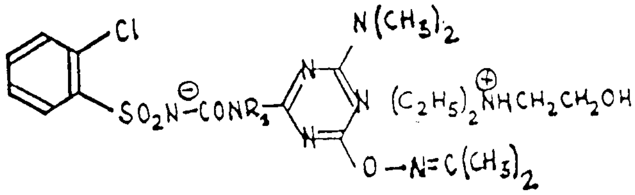

(I)

einem Ammoniumsalz eines Benzolsulfonylharnstoffderivats der Formel (II)

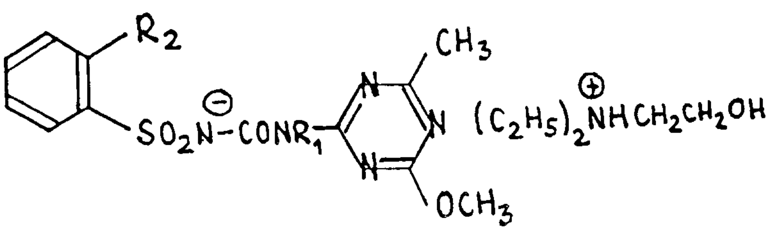

(II)

worin $R_1$ = H oder $CH_3$ und
$R_2$ = Cl, Carbomethoxy oder 2-Chlorethoxy bedeuten,

und zusätzlich einer oberflächenaktiven Substanz, einem organischen Lösungsmittel, Triethylenglykol und Wasser bei nachfolgender Zusammensetzung der Komponenten (in Masse-%):

| | |
|---|---|
| Verbindung der Formel (I) | 1,5 - 3,0% |
| Verbindung der Formel (II) | 1,5 - 30% |
| oberflächenaktive Substanz | 1,0 - 5,0% |
| Triethylenglykol | 20 - 40% |
| Wasser | bis auf 100%. |

Als oberflächenaktive Substanz verwendet man nachfolgende Verbindungen: bis-polyoxyethyliertes Alkylamin, Natrium-bis(2-ethylhexyl)-succinatosulfonat, monoalkylierte Polyethylenglykolether auf Fettspiritusbasis oder alkylarylierte Polyethylen- oder Polypropylenglykolether.

Die Kombination von Sulfonylharnstoffsalzen der Formeln (I) und (II) gewährleistet einen überraschenden, in biologischen Experimenten bestätigten synergistischen Effekt.

Einzeln applizierte herbizide Zusammensetzungen auf der Basis von Ammoniumsalzen des Sulfonylharnstoffes der Formeln (I) und (II) besitzen unterschiedliche Wirkungsspektren. Eine herbizide Zusammensetzung der Formel (I) stimuliert hauptsächlich folgende Kulturpflanzen - Weizen, Mais, Soja, Baumwolle, und unterdrückt Unkräuter - Spitzklette, Weißer Gänsefuß, Senf. Dagegen erzielen Zusammensetzungen mit Wirkstoffen der Formel (II) einen signifikanten herbiziden Effekt in allen aufgezählten Versuchen mit Ausnahme von Weizen.

Der synergistische Effekt eines Gemisches aus Ammoniumsalzen des Sulfonylharnstoffs der Formeln (I) und (II) kann sowohl die herbizide Wirkung erhöhen (+) (Synergismus) als auch vermindern (-)(Antagonismus). In Fällen, in denen der Wirkstoff (I) eine stimulierende Wirkung auf Pflanzen ausübt, z.B. bei Mais, Soja, Baumwolle, und man den Wirkstoff (II) mit stark ausgeprägter herbizider Wirkung im Verhältnis (I) > (II) hinzufügt, entsteht ein (-) antagonistischer Effekt. Wenn (I) zu (II) im Verhältnis (I)< (II) hinzugefügt wird, ist der synergistische Effekt positiv (+).

Der synergistische Effekt wird wie folgt berechnet:

$$E = E_g - E_e.$$

Dabei bedeuten:

$E_g$ = gefundene herbizide Wirkung in % der abgestorbenen Pflanzen,
$E_e$ = erwartetes Pflanzenabsterben in % gemäß Colby, worin $E_e = X + Y - (XY)/100$ ,
X - Schädigung der Pflanzen in % bei (I)
Y - Schädigung der Pflanzen in % bei (II).

Zum Beispiel:

| | | |
|---|---|---|
| Bei Mais | (I)/(IIA) = 2:1 | E = -58% |
| | (I)/(IIA) = 1:2 | E = +12% |
| Bei | (I)/(IIA) = 13:1 | E = +46% |
| | (I)/(IIA) = 1:13 | E = +22%. |

Ein analoger Effekt wurde in allen Versuchen beobachtet.

Somit gewährleisten herbizide Zusammensetzungen bestehend aus Gemischen von Ammoniumsalzen der Sulfonylharnstoffe der Formeln (I) und (II) eine effektive Unkrautbekämpfung bei bedeutend verminderten Aufwandmengen der einzelnen Wirkstoffe, wobei Kulturpflanzen wie Weizen, Mais, Soja und dergleichen geschützt werden.

Die Erfindung wird anhand folgender Beispiele veranschaulicht.

<u>Beispiel 1: Herstellung des Diethylethanolammoniumsalzes des 1-(2-Chlorbenzolsulfonyl)-3-(4-isopropylideniminoxy-6-dimethylamino-1,3,5-triazin-2-yl)-harnstoffes</u>

In einen Reaktor gibt man 427 g (1 Mol) 1-(2-Chlorbenzolsulfonyl-3-(4-isopropylideniminoxy-6-dimethylamino-1,3,5-triazin-2- yl)-harnstoff (1), 117 g Diethylaminoethanol und 10 l Wasser und vermischt den Inhalt bei Zimmertemperatur bis zur völligen Auflösung des Bodensatzes. Anschließend dampft man die Lösung im Vakuum eines Rotationsverdampfers ein und erhält das Diethylethanolammoniumsalz des Harnstoffes der Formel (I) in guter Ausbeute.

In gleicher Weise erhält man die Diethylethanolammoniumsalze des Benzolsulfonylharnstoffes der Formel (II).

Die Ergebnisse der Elementaranalyse und der physikalischchemischen Eigenschaften der Diethylethanolammoniumsalze der Sulfonylharnstoffe der Formeln (I) und (II) sind in Tabelle 1 angeführt.

<u>Beispiel 2: Herstellung einer herbiziden Zusammensetzung</u>

In einen Reaktor gibt man berechnete Mengen von Diethylethanolammoniumsalzen der Sulfonylharnstoffe der Formeln (I) und (II), Wasser, Triethylenglykol und oberflächenaktive Substanz und mischt den Inhalt bei 20°C eine Stunde lang.

In Tabelle 2 sind Beispiele für herbizide Zusammensetzungen mit verschiedenem Wirkstoffinhalt angeführt.

<u>Beispiel 3: Versuche auf herbizide Wirkung</u>

Die herbizide Zusammensetzung 1.1 (Beispiel 1, Tabelle 1) enthält die Ammoniumsalze von Sulfonylharnstoffen der Formeln (I) und (II) im Bereich von 1,5 bis 30 Masse% und wurde im Labor bei einer Aufwandmenge des Präparates von 100 g/ha getestet.

Für die Versuche wurden monokotyledone Kulturen - Weizen, Mais - und Dikotyle - Weißer Gänsefuß, Soja, Flachs, Baumwolle, Spitzklette, Senf - verwendet.

Die Herbizide wurden bei nachfolgenden Wachstumsstadien der Pflanzen angewendet: Getreide beim Erscheinen des dritten Blattes, Soja beim Erscheinen des dritten Blattes, in allen anderen Versuchen beim zweiten echten Blatt. Die Bodenfeuchtigkeit wurde bei täglicher Bewässerung in Höhe von 60-70% maximaler Feuchtigkeitskapazität gehalten.

Die Wirksamkeit der herbiziden Zusammensetzungen im Vergleich zu nichtbearbeiteten Mustersaaten wurde nach 14 Tagen ab dem Besprühen der wachsenden Pflanzen ermittelt.

Die Versuchsergebnisse sind in den Tabellen 3 bis 6 dargestellt.

Tabelle 1

**ELEMENTARANALYSE UND PHYSIKALISCH-CHEMISCHE DATEN DER DIETHYLETHANOLAMMONIUMSALZE (I) UND (II)**

| Strukturformel | Summenformel | Elementaranalyse berech. | gefund. | $T_{schm}$ °C | $\nu_{co}$ $cm^{-1}$ | $\lambda_{max}$ nm |
|---|---|---|---|---|---|---|
| 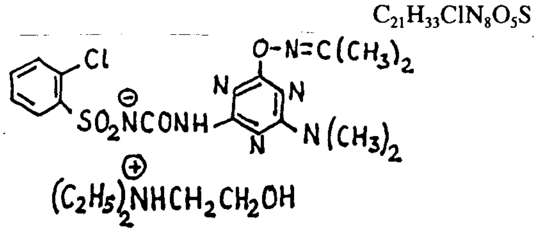 | $C_{21}H_{33}ClN_8O_5S$ | C 46.1<br>H 6.1<br>N 20.6 | 46.5 46.4<br>6.1 6.0<br>20.7 20.6 | 125-7 | 1650 | 240 |
| 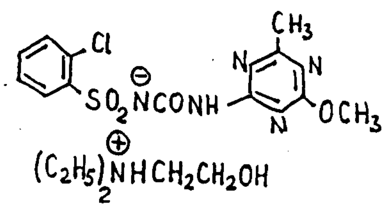 | $C_{18}H_{27}ClN_6O_3S$ | C 45.6<br>H 5.7<br>N 17.7 | 45.7 45.6<br>5.5 5.6<br>17.9 18.0 | 142-6 | 1651 | 234 |
| 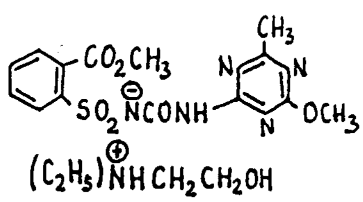 | $C_{20}H_{30}N_6O_7S$ | C 48.2<br>H 6.0<br>N 16.2 | 48.3 48.4<br>6.1 5.9<br>16.7 16.6 | 123-5 | 1642 | 238 |
| 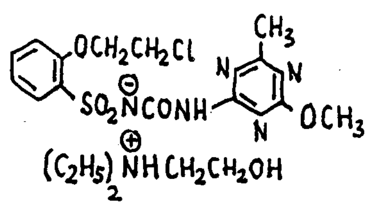 | $C_{20}H_{31}ClN_6O_6S$ | C 46.3<br>H 6.0<br>N 16.2 | 46.5 46.4<br>6.1 5.9<br>16.0 16.3 | 154-8 | 1655 | 238 |
| 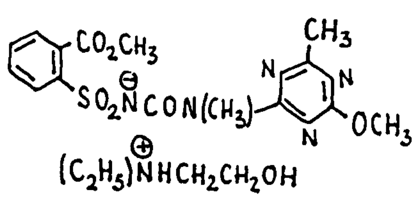 | $C_{21}H_{32}N_6O_7S$ | C 49.2<br>H 6.3<br>N 16.4 | 49.1 49.3<br>6.2 6.1<br>16.4 16.2 | 120-7 | 1645 | 241 |

Tabelle 2

| Herbizide Zusammensetzung | Komponentengehalt in Prozenten | | | | |
|---|---|---|---|---|---|
| 1.1 Diethylethanolammoniumsalz der Formel (I) | 1.5 | 1.5 | 10 | 30 | 30 |
| Diethylethanolammoniumsalze der Formel (II) (IIA, IIB, IIC, IID) | 1.5 | 30 | 10 | 1.5 | 30 |
| Oberflächenaktive Substanz | 1 | 2.5 | 2 | 2.5 | 5 |
| Triethylenglykol | 40 | 30 | 35 | 30 | 20 |
| Wasser | 56 | 36 | 43 | 36 | 15 |

Tabelle 3

HERBIZIDE WIRKUNG DER ZUSAMMENSETZUNG 1.1 (I + IIA)

Verminderung der Pflanzenmasse im Vergleich zur unbehandelten Kontrolle
(+ bedeutet Zuwachs der Pflanzenmasse)

Weizen

| IIA\I | 0 | 1.5 | 5 | 10 | 20 | 30 |
|---|---|---|---|---|---|---|
| 0 | | +5 | +15 | +18 | + 8 | +12 |
| 1.5 | +2 | +5 | + 6 | +32 | + 6 | + 8 |
| 5 | +6 | +3 | + 8 | + 7 | 0 | +13 |
| 10 | 0 | 0 | + 4 | 0 | + 3 | + 9 |
| 20 | 13 | 14 | 3 | 6 | 2 | +14 |
| 30 | 21 | 27 | 14 | 12 | 7 | 0 |

Weißer Gänsefuß

| IIA\I | 0 | 1.5 | 5 | 10 | 20 | 30 |
|---|---|---|---|---|---|---|
| 0 | | 18 | 25 | 48 | 70 | 81 |
| 1.5 | 46 | 72 | 71 | 72 | 78 | 88 |
| 5 | 85 | 88 | 88 | 82 | 83 | 100 |
| 10 | 100 | 100 | 100 | 100 | 94 | 96 |
| 20 | 100 | 100 | 100 | 100 | 100 | 100 |
| 30 | 100 | 100 | 100 | 100 | 100 | 100 |

Mais

| IIA\I | 0 | 1.5 | 5 | 10 | 20 | 30 |
|---|---|---|---|---|---|---|
| 0 | | +4 | + 8 | +15 | +12 | 2 |
| 1.5 | 27 | +2 | + 4 | + 6 | + 4 | 0 |
| 5 | 35 | 42 | 0 | + 9 | + 4 | + 8 |
| 10 | 48 | 54 | 51 | 5 | +16 | 8 |
| 20 | 72 | 83 | 79 | 68 | 51 | 42 |
| 30 | 81 | 91 | 93 | 96 | 79 | 63 |

Baumwolle

| IIA\I | 0 | 1.5 | 5 | 10 | 20 | 30 |
|---|---|---|---|---|---|---|
| 0 | | +8 | +12 | +23 | +11 | 8 |
| 1.5 | 18 | +6 | + 5 | + 2 | +18 | +12 |
| 5 | 23 | 0 | + 2 | + 4 | + 2 | +13 |
| 10 | 41 | 23 | 38 | 0 | +12 | + 8 |
| 20 | 67 | 58 | 66 | 42 | 21 | + 4 |
| 30 | 72 | 86 | 88 | 81 | 64 | 34 |

Soja

| IIA\I | 0 | 1.5 | 5 | 10 | 20 | 30 |
|---|---|---|---|---|---|---|
| 0 | | + 8 | +12 | +17 | + 9 | +12 |
| 1.5 | 28 | 15 | 7 | +15 | +33 | +13 |
| 5 | 47 | 58 | 47 | +16 | +13 | +18 |
| 10 | 87 | 81 | 89 | 58 | +13 | 9 |
| 20 | 97 | 98 | 100 | 100 | 66 | 13 |
| 30 | 100 | 100 | 100 | 100 | 100 | 77 |

Flachs

| IIA\I | 0 | 1.5 | 5 | 10 | 20 | 30 |
|---|---|---|---|---|---|---|
| 0 | | 0 | + 2 | + 8 | + 3 | 5 |
| 1.5 | 11 | 17 | 12 | 9 | 8 | 0 |
| 5 | 20 | 16 | 12 | 9 | 5 | 2 |
| 10 | 26 | 23 | 18 | 14 | 9 | 4 |
| 20 | 20 | 21 | 20 | 18 | 16 | 11 |
| 30 | 28 | 29 | 26 | 18 | 19 | 13 |

Spitzklette

| IIA\I | 0 | 1.5 | 5 | 10 | 20 | 30 |
|---|---|---|---|---|---|---|
| 0 | | 0 | 0 | + 2 | 12 | 17 |
| 1.5 | 10 | 57 | 54 | 63 | 70 | 79 |
| 5 | 17 | 66 | 76 | 71 | 73 | 81 |
| 10 | 61 | 72 | 84 | 71 | 64 | 73 |
| 20 | 71 | 86 | 93 | 83 | 78 | 86 |
| 30 | 77 | 91 | 97 | 96 | 100 | 91 |

Senf

| IIA\I | 0 | 1.5 | 5 | 10 | 20 | 30 |
|---|---|---|---|---|---|---|
| 0 | | 13 | 31 | 43 | 58 | 65 |
| 1.5 | 58 | 49 | 48 | 72 | 82 | 88 |
| 5 | 76 | 58 | 61 | 69 | 83 | 86 |
| 10 | 89 | 81 | 74 | 89 | 81 | 92 |
| 20 | 100 | 93 | 90 | 94 | 100 | 87 |
| 30 | 100 | 100 | 98 | 99 | 100 | 100 |

Tabelle 4

HERBIZIDE WIKUNG DER ZUSAMMENSETZUNG (I + IIB)

Verminderung der Pflanzenmasse im Vergleich zur unbehandelten Kontrolle
(+ bedeutet Zuwachs der Pflanzenmasse)

Weizen

| IIB\I | 0 | 1.5 | 5 | 10 | 20 | 30 |
|---|---|---|---|---|---|---|
| 0 | | +5 | +15 | +18 | + 8 | +12 |
| 1.5 | 0 | 0 | + 2 | + 8 | + 8 | + 8 |
| 5 | 0 | 4 | 8 | + 4 | + 4 | 6 |
| 10 | 8 | 11 | 13 | 8 | 4 | 4 |
| 20 | 16 | 21 | 19 | 17 | 17 | 10 |
| 30 | 24 | 29 | 30 | 21 | 22 | 18 |

Weißer Gänsefuß

| IIB\I | 0 | 1.5 | 5 | 10 | 20 | 30 |
|---|---|---|---|---|---|---|
| 0 | | 18 | 25 | 48 | 70 | 81 |
| 1.5 | 63 | 82 | 84 | 80 | 79 | 91 |
| 5 | 88 | 93 | 92 | 91 | 92 | 89 |
| 10 | 100 | 100 | 96 | 91 | 95 | 88 |
| 20 | 100 | 100 | 100 | 98 | 100 | 96 |
| 30 | 100 | 100 | 100 | 100 | 100 | 100 |

Mais

| IIB\I | 0 | 1.5 | 5 | 10 | 20 | 30 |
|---|---|---|---|---|---|---|
| 0 | | +4 | + 8 | +15 | + 2 | 2 |
| 1.5 | 21 | +6 | + 7 | +11 | 5 | 11 |
| 5 | 27 | 33 | 6 | + 3 | 1 | 14 |
| 10 | 52 | 64 | 65 | 7 | + 2 | 9 |
| 20 | 68 | 69 | 73 | 68 | 19 | 6 |
| 30 | 74 | 83 | 79 | 81 | 79 | 25 |

Baumwolle

| IIB\I | 0 | 1.5 | 5 | 10 | 20 | 30 |
|---|---|---|---|---|---|---|
| 0 | | +8 | +12 | +23 | +11 | 8 |
| 1.5 | 9 | +1 | +11 | +27 | +37 | +14 |
| 5 | 16 | 13 | + 8 | + 7 | + 6 | +17 |
| 10 | 57 | 32 | 22 | + 4 | +16 | +11 |
| 20 | 69 | 48 | 53 | 42 | 4 | +10 |
| 30 | 81 | 63 | 59 | 67 | 72 | 19 |

Soja

| IIB\I | 0 | 1.5 | 5 | 10 | 20 | 30 |
|---|---|---|---|---|---|---|
| 0 | | + 8 | +12 | +17 | + 9 | +12 |
| 1.5 | 21 | 6 | + 7 | +11 | 5 | +15 |
| 5 | 38 | 39 | 21 | + 3 | 1 | 14 |
| 10 | 48 | 49 | 59 | 40 | + 2 | 9 |
| 20 | 81 | 76 | 69 | 72 | 78 | 6 |
| 30 | 100 | 100 | 100 | 100 | 100 | 77 |

Flachs

| IIB\I | 0 | 1.5 | 5 | 10 | 20 | 30 |
|---|---|---|---|---|---|---|
| 0 | | 0 | + 2 | + 8 | + 3 | 5 |
| 1.5 | 13 | 16 | 13 | 10 | +11 | 0 |
| 5 | 14 | 13 | 22 | 7 | 12 | +2 |
| 10 | 23 | 22 | 20 | 17 | 17 | 6 |
| 20 | 33 | 21 | 24 | 15 | 28 | 27 |
| 30 | 28 | 29 | 26 | 18 | 27 | 34 |

Spitzklette

| IIB\I | 0 | 1.5 | 5 | 10 | 20 | 30 |
|---|---|---|---|---|---|---|
| 0 | | 0 | 0 | + 2 | 12 | 17 |
| 1.5 | 33 | 74 | 52 | 72 | 66 | 74 |
| 5 | 42 | 58 | 79 | 70 | 78 | 80 |
| 10 | 68 | 74 | 81 | 86 | 78 | 86 |
| 20 | 88 | 88 | 91 | 93 | 95 | 87 |
| 30 | 100 | 100 | 100 | 100 | 100 | 96 |

Senf

| IIB\I | 0 | 1.5 | 5 | 10 | 20 | 30 |
|---|---|---|---|---|---|---|
| 0 | | 13 | 31 | 43 | 58 | 65 |
| 1.5 | 61 | 78 | 77 | 86 | 82 | 74 |
| 5 | 83 | 87 | 86 | 89 | 96 | 89 |
| 10 | 100 | 94 | 96 | 100 | 92 | 96 |
| 20 | 100 | 100 | 100 | 100 | 100 | 100 |
| 30 | 100 | 100 | 100 | 100 | 100 | 100 |

Tabelle 5

HERBIZIDE WIRKUNG DER ZUSAMMENSETZUNG 1.1 (I + IIC)

Verminderung der Pflanzenmasse im Vergleich zur unbehandelten Kontrolle
(+ bedeutet Zuwachs der Pflanzenmasse)

Weizen

| IIC\I | 0 | 1.5 | 5 | 10 | 20 | 30 |
|---|---|---|---|---|---|---|
| 0 | | +5 | +15 | +18 | + 8 | +12 |
| 1.5 | 0 | +2 | 0 | +17 | +18 | 0 |
| 5 | 0 | 0 | 2 | + 4 | + 4 | 6 |
| 10 | 0 | 0 | 0 | + 4 | + 4 | 7 |
| 20 | 8 | 0 | 4 | 0 | 0 | + 2 |
| 30 | 6 | 5 | 2 | 3 | 7 | 17 |

Weißer Gänsefuß

| IIC\I | 0 | 1.5 | 5 | 10 | 20 | 30 |
|---|---|---|---|---|---|---|
| 0 | | 18 | 25 | 48 | 70 | 81 |
| 1.5 | 71 | 97 | 92 | 79 | 82 | 77 |
| 5 | 92 | 100 | 100 | 91 | 82 | 79 |
| 10 | 95 | 100 | 100 | 100 | 96 | 86 |
| 20 | 100 | 100 | 100 | 100 | 100 | 96 |
| 30 | 100 | 100 | 100 | 100 | 100 | 100 |

Mais

| IIC\I | 0 | 1.5 | 5 | 10 | 20 | 30 |
|---|---|---|---|---|---|---|
| 0 | | +4 | + 8 | +15 | +12 | 2 |
| 1.5 | 48 | 12 | + 6 | + 8 | +13 | 8 |
| 5 | 64 | 38 | 17 | 0 | +14 | 14 |
| 10 | 72 | 48 | 38 | 31 | +13 | 0 |
| 20 | 86 | 63 | 59 | 42 | 28 | 27 |
| 30 | 88 | 72 | 69 | 55 | 48 | 46 |

Baumwolle

| IIC\I | 0 | 1.5 | 5 | 10 | 20 | 30 |
|---|---|---|---|---|---|---|
| 0 | | +8 | +12 | +23 | +11 | 8 |
| 1.5 | 0 | 7 | 6 | + 5 | +13 | + 5 |
| 5 | 8 | 10 | 8 | 4 | 0 | + 4 |
| 10 | 14 | 8 | 10 | 12 | 12 | 12 |
| 20 | 48 | 32 | 28 | 20 | 18 | 8 |
| 30 | 62 | 54 | 48 | 39 | 42 | 37 |

Soja

| IIC\I | 0 | 1.5 | 5 | 10 | 20 | 30 |
|---|---|---|---|---|---|---|
| 0 | | + 8 | +12 | +17 | + 9 | +12 |
| 1.5 | 33 | 27 | 12 | +17 | +11 | + 6 |
| 5 | 41 | 38 | 22 | 17 | +12 | 6 |
| 10 | 62 | 39 | 47 | 48 | 24 | + 3 |
| 20 | 87 | 64 | 58 | 55 | 57 | 17 |
| 30 | 74 | 82 | 76 | 78 | 66 | 62 |

Flachs

| IIC\I | 0 | 1.5 | 5 | 10 | 20 | 30 |
|---|---|---|---|---|---|---|
| 0 | | 0 | + 2 | + 8 | + 3 | 5 |
| 1.5 | 16 | 16 | 12 | 8 | 4 | 7 |
| 5 | 24 | 19 | 24 | 11 | 8 | 6 |
| 10 | 18 | 16 | 19 | 17 | 8 | 9 |
| 20 | 31 | 27 | 22 | 21 | 19 | 8 |
| 30 | 38 | 33 | 26 | 18 | 21 | 26 |

Spitzklette

| IIC\I | 0 | 1.5 | 5 | 10 | 20 | 30 |
|---|---|---|---|---|---|---|
| 0 | | 0 | 0 | + 2 | 12 | 17 |
| 1.5 | 33 | 46 | 42 | 58 | 55 | 62 |
| 5 | 47 | 56 | 69 | 73 | 69 | 73 |
| 10 | 58 | 62 | 78 | 81 | 77 | 78 |
| 20 | 74 | 79 | 80 | 83 | 78 | 88 |
| 30 | 83 | 85 | 83 | 89 | 90 | 94 |

Senf

| IIC\I | 0 | 1.5 | 5 | 10 | 20 | 30 |
|---|---|---|---|---|---|---|
| 0 | | 24 | 31 | 43 | 58 | 65 |
| 1.5 | 61 | 68 | 72 | 72 | 82 | 89 |
| 5 | 87 | 88 | 71 | 68 | 69 | 86 |
| 10 | 92 | 84 | 82 | 86 | 78 | 80 |
| 20 | 88 | 89 | 87 | 90 | 92 | 82 |
| 30 | 100 | 96 | 94 | 96 | 100 | 96 |

Tabelle 6

HERBIZIDE WIRKUNG DER ZUSAMMENSETZUNG 1.1 (I + IID)

Verminderung der Pflanzenmasse im Vergleich zur unbehandelten Kontrolle
(+ bedeutet Zuwachs der Pflanzenmasse)

Weizen

| IID\I | 0 | 1.5 | 5 | 10 | 20 | 30 |
|---|---|---|---|---|---|---|
| 0 | | +5 | +15 | +18 | + 8 | +12 |
| 1.5 | 0 | +2 | + 4 | + 6 | +10 | + 8 |
| 5 | 6 | 4 | 0 | + 4 | + 6 | +11 |
| 10 | 14 | 12 | 8 | 4 | + 2 | 0 |
| 20 | 23 | 26 | 18 | 12 | 8 | 2 |
| 30 | 31 | 36 | 24 | 31 | 34 | 18 |

Weißer Gänsefuß

| IID\I | 0 | 1.5 | 5 | 10 | 20 | 30 |
|---|---|---|---|---|---|---|
| 0 | | 18 | 25 | 48 | 70 | 81 |
| 1.5 | 72 | 86 | 90 | 91 | 89 | 93 |
| 5 | 94 | 96 | 98 | 98 | 98 | 98 |
| 10 | 100 | 100 | 100 | 100 | 100 | 100 |
| 20 | 100 | 100 | 100 | 100 | 100 | 100 |
| 30 | 100 | 100 | 100 | 100 | 100 | 100 |

Mais

| IID\I | 0 | 1.5 | 5 | 10 | 20 | 30 |
|---|---|---|---|---|---|---|
| 0 | | +4 | + 8 | +15 | +12 | 2 |
| 1.5 | 38 | 12 | 0 | + 4 | +11 | +10 |
| 5 | 54 | 36 | 24 | 12 | +14 | + 8 |
| 10 | 72 | 56 | 48 | 14 | + 2 | + 6 |
| 20 | 82 | 79 | 81 | 76 | 16 | 2 |
| 30 | 86 | 88 | 93 | 88 | 93 | 28 |

Baumwolle

| IID\I | 0 | 1.5 | 5 | 10 | 20 | 30 |
|---|---|---|---|---|---|---|
| 0 | | +8 | +12 | +23 | +11 | 8 |
| 1.5 | 23 | 8 | 4 | 0 | + 4 | + 2 |
| 5 | 41 | 36 | 16 | 11 | 2 | 6 |
| 10 | 64 | 58 | 55 | 14 | 6 | + 1 |
| 20 | 72 | 78 | 68 | 74 | 24 | 14 |
| 30 | 86 | 82 | 92 | 83 | 78 | 68 |

Soja

| IID\I | 0 | 1.5 | 5 | 10 | 20 | 30 |
|---|---|---|---|---|---|---|
| 0 | | + 8 | +12 | +17 | + 9 | +12 |
| 1.5 | 36 | 21 | 8 | + 1 | + 2 | + 4 |
| 5 | 52 | 38 | 18 | 21 | + 6 | 2 |
| 10 | 67 | 66 | 55 | 48 | + 8 | 4 |
| 20 | 83 | 88 | 78 | 61 | 66 | 31 |
| 30 | 98 | 100 | 91 | 100 | 88 | 82 |

Flachs

| IID\I | 0 | 1.5 | 5 | 10 | 20 | 30 |
|---|---|---|---|---|---|---|
| 0 | | 0 | + 2 | + 8 | + 3 | 5 |
| 1.5 | 12 | 17 | 8 | 12 | 5 | 3 |
| 5 | 19 | 14 | 13 | 4 | + 3 | + 8 |
| 10 | 26 | 23 | 18 | 16 | 13 | 6 |
| 20 | 33 | 42 | 37 | 28 | 27 | 10 |
| 30 | 30 | 41 | 24 | 33 | 32 | 18 |

Spitzklette

| IID\I | 0 | 1.5 | 5 | 10 | 20 | 30 |
|---|---|---|---|---|---|---|
| 0 | | 0 | 0 | + 2 | 12 | 17 |
| 1.5 | 44 | 56 | 52 | 64 | 66 | 58 |
| 5 | 56 | 69 | 66. | 71 | 69 | 74 |
| 10 | 74 | 77 | 83 | 74 | 83 | 88 |
| 20 | 88 | 94 | 96 | 87 | 93 | 92 |
| 30 | 96 | 100 | 100 | 100 | 100 | 98 |

Senf

| IID\I | 0 | 1.5 | 5 | 10 | 20 | 30 |
|---|---|---|---|---|---|---|
| 0 | | 13 | 31 | 43 | 58 | 65 |
| 1.5 | 67 | 83 | 81 | 88 | 82 | 94 |
| 5 | 85 | 88 | 92 | 84 | 88 | 96 |
| 10 | 100 | 96 | 98 | 100 | 94 | 100 |
| 20 | 100 | 100 | 100 | 100 | 100 | 100 |
| 30 | 100 | 100 | 100 | 100 | 100 | 100 |

**Patentansprüche**

1. Herbizide Zusammensetzung bestehend aus zwei Derivaten des Benzolsulfonylharnstoffes, einer oberflächenaktiven Substanz, einem organischen Lösungsmittel und Wasser, **dadurch gekennzeichnet,** daß sie als Benzolsulfonylharnstoffderivate ein Diethylethanolammoniumsalz des Benzolsulfonylharnstoffs der Formel (I)

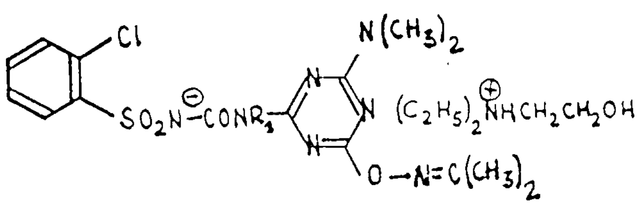

(I)

und ein Diethylethanolammoniumsalz eines Benzolsulfonylharnstoffs der Formel (II)

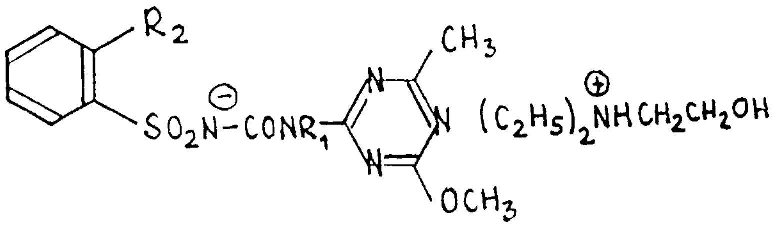

(II)

worin $R_1$ = H oder $CH_3$ und
$R_2$ = Cl, Carbomethoxy oder 2-Chlorethoxy bedeuten,

als oberflächenaktive Substanz ein bis-polyoxyethyliertes Alkylamin, Natrium-bis(2-ethylhexyl)-succinatosulfonat, monoalkylierte Polyethylenglykolether auf Fettspiritusbasis oder alkylarylierte Polyethylen- oder Polypropylenglykolether, und als Lösungsmittel Triethylenglykol enthält bei nachfolgender Zusammensetzung der Komponenten (in Masse-%):

| | |
|---|---|
| Verbindung der Formel (I) | 1,5 - 3,0% |
| Verbindung der Formel (II) | 1,5 - 30% |
| oberflächenaktive Substanz | 1,0 - 5,0% |
| Triethylenglykol | 20 - 40% |
| Wasser | bis auf 100%. |

## Claims

1. Herbicidal composition comprising two derivatives of benzenesulphonylurea, a surface-active substance, an organic solvent and water, characterized in that it comprises, as the benzenesulphonylurea derivative, a diethylethanolammonium salt of benzenesulphonylurea of the formula (I)

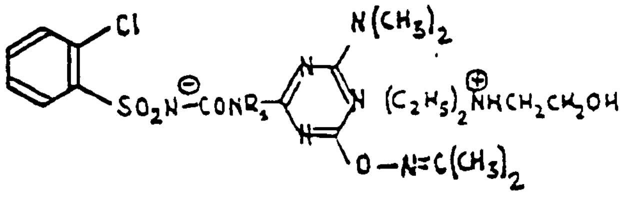

(I)

and a diethylethanolammonium salt of a benzenesulphonylurea of the formula (II)

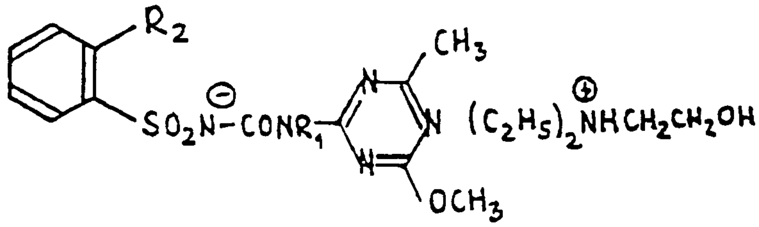

(II)

wherein $R_1$ = H or $CH_3$ and
$R_2$ = Cl, carbomethoxy or 2-chloroethoxy,

as the surface-active substance, a bis-polyoxyethylated alkylamine, sodium bis(2-ethylhexyl)-succinatosulphonate, a monoalkylated polyethylene glycol ether based on fatty alcohol or an alkylarylated polyethylene or polypropylene glycol ether and, as the solvent, triethylene glycol, with the following composition of the components (in % by weight):

| | |
|---|---|
| compound of the formula (I) | 1.5 - 3.0% |
| compound of the formula (II) | 1.5 - 30% |
| surface-active substance | 1.0 - 5.0% |
| triethylene glycol | 20 - 40% |
| water | up to 100% |

**Revendications**

1. Composition herbicide constituée de deux dérivés de la benzènesulfonylurée, d'une substance tensioactive, d'un solvant organique et d'eau, caractérisée en ce qu'elle contient à titre de dérivés de la benzènesulfonylurée, un sel de diéthyléthanolammonium de la benzènesulfonylurée répondant à la formule (I)

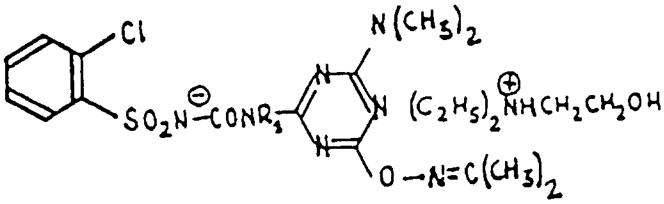

(I)

et un sel de diéthyléthanolammonium d'une benzènesulfonylurée répondant à la formule (II)

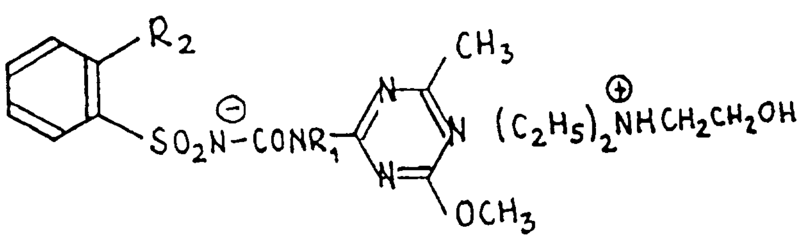

(II)

où $R_1$ = H ou $CH_3$ et
$R_2$ = Cl, un groupe carbométhoxy ou un groupe 2-chloroéthoxy,

à titre de substance tensioactive une alkylamine bis-polyoxyéthylée du bis(2-éthylhexyl)succinatosulfonate de sodium, du polyéthylèneglycoléther monoalkylé à base d'alcool gras ou un polyéthylène- ou polypropylèneglycoléther alkylarylé, et à titre de solvant du triéthylèneglycol avec la composition suivante des composants (en % en masse) :

| | |
|---|---|
| composé répondant à la formule (I) | 1,5 à 3,0 % |
| composé répondant à la formule (II) | 1,5 à 30 % |
| substance tensioactive | 1,0 à 5,0 % |
| triéthylèneglycol | 20 à 40 % |
| eau | jusqu'à 100%. |